# EUROPEAN PATENT SPECIFICATION

(11) **EP 4 155 594 B1**
(45) Date of publication and mention of the grant of the patent: **05.11.2025**
(21) Application number: 22020452.3
(22) Date of filing: 22.09.2022
(51) Int. Cl.: F16K 39/02, F16K 1/44, F16K 31/06, F16F 9/00

(54) **TWO-STAGE VALVE ASSEMBLY**
ZWEISTUFIGE VENTILANORDNUNG
ENSEMBLE SOUPAPE À DEUX ÉTAGES

(30) Priority: 22.09.2021 US 202117482410; 25.08.2022 CN 202211025165
(43) Date of publication of application: 29.03.2023
(73) Proprietor: BWI (Shanghai) Co., Ltd., Shanghai 200131 (CN)
(72) Inventor: Grajeda, Yinko I, Kettering, OH 45420 (US)
(74) Representative: Lukaszyk, Szymon

(56) References cited:
- DE-A1- 102016 216 293
- DE-A1- 102019 103 447
- DE-U1- 202016 000 441

## Description

### Field of the Invention

The present invention generally relates to a two-stage valve assembly for redistributing fluid in a lift system of a vehicle.

### Description of the Prior Art

It is oftentimes beneficial to adjust the height of a vehicle body. For example, by raising the vehicle body to an extended position or lowering the vehicle body to a constricted position, the ground and roof clearance can be modified permitting travel in conditions that would not otherwise be possible or advisable. Devices that facilitate this adjustment are traditionally provided in or around suspension struts of motor vehicles. Typically, such devices include a lift housing disposed on a center axis defining a chamber. A support tube is disposed in the chamber with the lift housing being movable along the center axis relative to the support tube. The movement of the lift housing is oftentimes driven using a hydraulic or pneumatic actuator. These actuators oftentimes include a solenoid poppet valves to control the pressures in the chamber. The poppet valves must be designed to meet system flow, pressure, temperature, and voltage specifications along with exhibiting robustness to function under multiple operating cycles.

In operations with higher flow requirements, larger flow and increased sealing areas reduce pressure capabilities. Thus, a valve in a closed position typically requires a larger return spring to be able to meet the increased counter-seal leak and pressure. To overcome these limitations, power input to the solenoid can be increased. However, the increase in solenoid operation is limited by the system's constraints, such as the physical size of the system components. Therefore, some operational parameters would require an overall increase of the solenoid valve package.

Accordingly, there is a continuing desire to improve upon the operational framework and efficiency of devices that adjust the height of a vehicle body. Two-stage valve assemblies according to the preamble of claim 1 are known from DE102016216293A1 and from DE102019103447A1.

The foregoing has outlined rather broadly the features and technical advantages of the present invention in order that the detailed description of the invention that follows may be better understood. Additional features and advantages of the invention will be described hereinafter that form the subject of the claims of the invention. It should be appreciated by those skilled in the art that the conception and the specific embodiments disclosed may be readily utilized as a basis for modifying or designing other embodiments for carrying out the same purposes of the present invention. It should also be realized by those skilled in the art that such equivalent embodiments do not depart from the scope of the invention as set forth in the appended claims. This section provides a general summary of the disclosure and is not to be interpreted as a complete and comprehensive listing of all of the objects, aspects, features and advantages associated with the present disclosure.

The invention provides for a two-stage valve assembly that provides a first-stage of fluid flow and a second-stage of fluid flow improving upon the operational framework and efficiency of traditional devices that have been used to selectively provide fluid flow. Further, the present invention provides for a two-stage valve assembly that has a simple design and a low cost in production.

It is one aspect of the present invention to provide a two-stage valve assembly. The two-stage valve assembly comprises an outer sleeve extending along an axis between a first end and a second end. A stator is located in the first end and a valve opening is located in the second end. The two-stage valve assembly includes an armature assembly for selectively closing the valve opening and opening the valve opening in a first-stage open position and a second-stage open position. The armature assembly comprises a plunger moveable along the axis that includes a poppet portion having a poppet seal oriented towards the second end. A plunger seat is moveable along the axis and located between the poppet portion and the valve opening. The plunger seat includes a seat seal for sealing against the valve opening. A seat channel extends through the seat seal and the plunger seat and is in fluid communication with the valve opening. The poppet seal closes the seat channel and the seat seal closes the valve opening in the closed position, the poppet seal is spaced from the seat channel in the first-stage open position, and the seat seal is spaced from the valve opening in the second-stage-open position. A first-stage preload spring extends from the stator to the plunger and biases the plunger towards the seat channel, wherein a second-stage preload spring extends from the stator to the plunger seat and biases the plunger seat towards the valve opening, wherein the first-stage preload spring defines a smaller preload than the second-stage preload spring.

Further areas of applicability will become apparent from the description provided herein. The description and specific examples in this summary are intended for purposes of illustration only and are not intended to limit the scope of the present disclosure.

### Brief Description of the Drawings

Other advantages of the present invention will be readily appreciated, as the same becomes better understood by reference to the following detailed description when considered in connection with the accompanying drawings wherein:
Fig. 1 is a side view of a two-stage valve assembly for raising and lowering the height of a vehicle in accordance with principles of the present disclosure;
Fig. 2 is an enlarged view of an armature assembly of the two-stage valve assembly in a closed position;
Fig. 3 is an enlarged view of the armature assembly of the two-stage valve assembly in a first-stage open position;
Fig. 4 is an enlarged view of the armature assembly of the two-stage valve assembly in a second-stage open position;
Fig. 5 is a disassembled view of certain features in the two-stage valve assembly;
Fig. 6 is a disassembled view of the armature assembly illustrating a first side of a plunger seat; and
Fig. 7 is a perspective view of a second side of the plunger seat.

### Description of the Enabling Embodiment

Example embodiments will now be described more fully with reference to the accompanying drawings. In general, the subject embodiments are directed to a two-stage valve assembly for raising and lowering the height of a vehicle. However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Referring to the drawing, wherein like numerals indicate corresponding parts throughout the several views, a two-stage valve assembly is provided for raising and lowering the height of the vehicle by redistributing fluid. The two-stage valve assembly improves upon the operational framework and efficiency of traditional devices that have been used to adjust the height of a vehicle body.

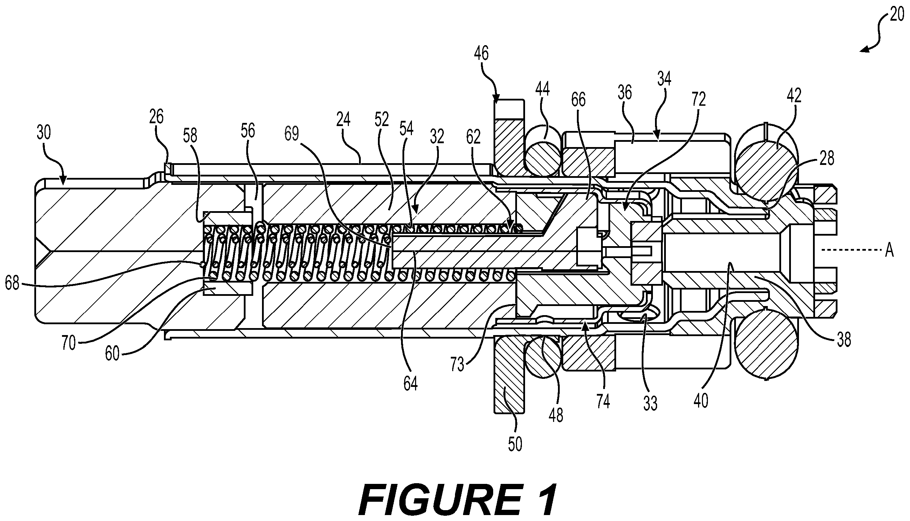

With initial reference to Fig. 1, the valve assembly 20 has an outer sleeve 24 extending along an axis A between a first end 26 and a second end 28. The valve assembly 20 includes a stator 30 located in the first end 26 and an armature assembly 32 located within the outer sleeve 24 and moveable along the axis A. A valve cup 34 is located around an outside of the second end 28 and defines a generally annular shape that closes around the second end 28. The valve cup 34 includes a valve body 36 that extends around the outer sleeve 24 towards the second end 28 and narrows to a valve structure 38 that enters the second end 28 and extends within the outer sleeve 24 towards the first end 26 along the axis A. In some embodiments, the valve structure 38 may be tubular. The valve structure 38 defines a valve opening 40 that extends along the axis A for interfacing with the armature assembly 32. The outer sleeve 24 may include one or more outer apertures 33 near an end of the valve cup 34. A lower seal 42 is located around an exterior of the valve body 36 in axial alignment with the second end 28 and an upper seal 44 is located around the outer sleeve 24 near an end of the valve cup 34 facing the first end 26. The lower seal 42 and the upper seal 44 may both be annularly shaped and formed of elastic and the lower seal 42 may define a larger gauge than that of the upper seal 44.

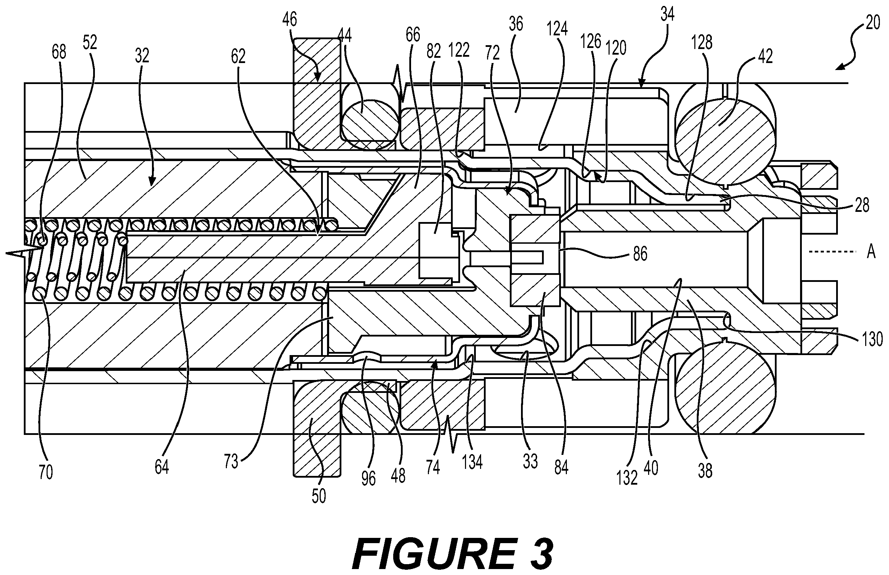

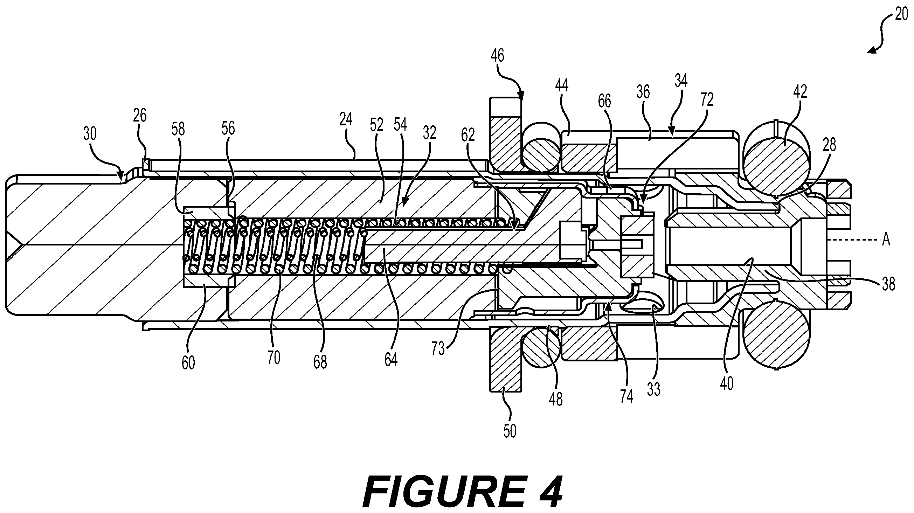

With continued reference to Fig. 1, a mounting collar 46 is located adjacent to the valve cup 34 facing the first end 26 and includes a body portion 48 that wraps around the outer sleeve 24 and a flange portion 50 that extends radially outwardly from the body portion 48. The upper seal 44 wraps around an exterior of the body portion 48. An interior surface of the outer sleeve 24 may define a cylindrically-shaped chamber extending about the axis A. The stator 30 enters the first end 26 of the outer sleeve 24. The stator includes a recess 58 that is aligned with the axis A. A bushing 60 is located in the recess 58 and may extend axially towards the second end 28. A central body 52 is located in the outer sleeve 24 and extends between the stator 30 and the second end 28. The central body 52 defines a channel 54 that extends through the central body 52 along the axis A. As will be described in greater detail below, the channel 54 guides certain features of the armature assembly 32. The valve assembly 20 includes a closed position (cf. Fig. 1), first-stage open position (cf. Fig. 3), and a second-stage open position (cf. Fig. 4). In the closed position, a gap 56 may be located between the central body 52 and the stator 30.

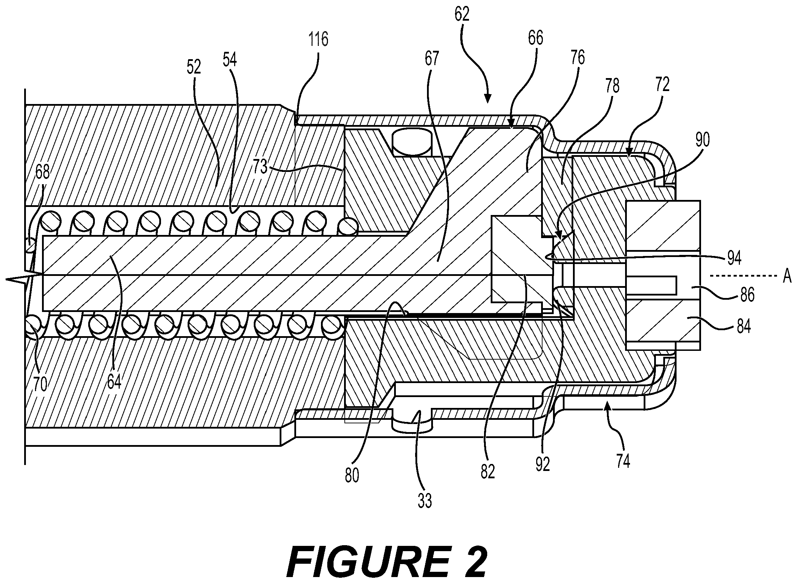

As best illustrated in Fig. 2, the armature assembly 32 includes a plunger 62 extending along the axis A between a rod body 64 oriented towards the first end 26 and a poppet portion 66 oriented towards the second end 28. The armature assembly 32 is preloaded with a pair of springs that include a first-stage preload spring 68 and a second-stage preload spring 70. The first-stage preload spring 68 abuts against a face end 69 of the rod body 64 and extends into the recess 58, through the bushing 60, and in abutment with the stator 30. The second-stage preload spring 70 extends from a plunger seat 72, around the rod body 64, around the first-stage preload spring 68, into the recess 58, through the bushing 60, and in abutment with the stator 30. The plunger seat 72 is located within the outer sleeve 24 between the poppet portion 66 and the second end 28. A seat sleeve 74 surrounds the plunger seat 72 and locates it within the outer sleeve 24. The second-stage preload spring 70 extends between and is in abutment with the stator 30 and a front face 73 of the plunger seat 72. The central body 52 extends between the stator 30 and the front face 73 of the plunger seat 72. In operation, the channel 54 in the central body 52 locates and guides the first-stage preload spring 68, the second-stage preload spring 70, and the rod body 64.

The poppet portion 66 includes a poppet body 67 and a plurality of fins 76 extending radially outwardly therefrom. In some embodiments, the plurality of fins 76 may include three or more fins 76 that are circumferentially equidistant. The plunger seat 72 includes a plurality of fin channels 78 (e.g., three) for slidably receiving the fins 76 and a central opening 80 for slidably receiving the poppet body 67 between the fins 76. A front face of the poppet portion 66 includes a poppet seal 82 and a front face of the plunger seat 72 includes a seat seal 84. A seat channel 86 extends through the seat seal 84 and the plunger seat 72 and is in fluid communication with the valve opening 40. The seat channel 86 is in alignment with and extends into the central opening 80 for direct interface with the poppet portion 66. A surface 90 of the plunger seat 72 within the central opening 80 that interfaces with the poppet seal 82 may include a non-flat shape. For example, the surface 90 may include a wall 92 having a conical-shape that outlines a portion of the seat channel 86 and narrows to an interface surface 94 facing the poppet seal 82. The seat channel 86 may become wider near the interface surface 94. As such, the poppet seal 82 may compress against the interface surface 94, at least partially into the seat channel 86, and around a portion of an exterior of the wall 92, when the valve assembly 20 is in the closed position. In some embodiments, the seat channel 86 has a different cross-sectional dimension than the valve opening 40, such as a smaller cross-sectional dimension that provides a slower flow rate.

With reference now to Fig. 3, the armature assembly 32 is illustrated in the first-stage open position. In the first-stage open position, the stator 30 attracts the plunger 62 and overcomes the preload of the first-stage preload spring 68, thereby causing the poppet seal 82 to move from the plunger seat 72 in a spaced relationship with the interface surface 94. The first-stage open position permits fluid to flow through the valve opening 40, the seat channel 86, and through the fin channels 78 for a first pressure reduction.

With reference now to Fig. 4, the armature assembly 32 is illustrated in the second-stage open position. After the first pressure reduction, the stator 30 attracts the plunger seat 72 and overcomes the preload of the second-stage preload spring 70 moving the seat seal 84 away from the valve opening 40 to permit a greater fluid flow and pressure reduction in the second-stage open position. With the first pressure reduction, previous requirements of a larger return spring to meet the increased counter-seal leak and pressure is eliminated.

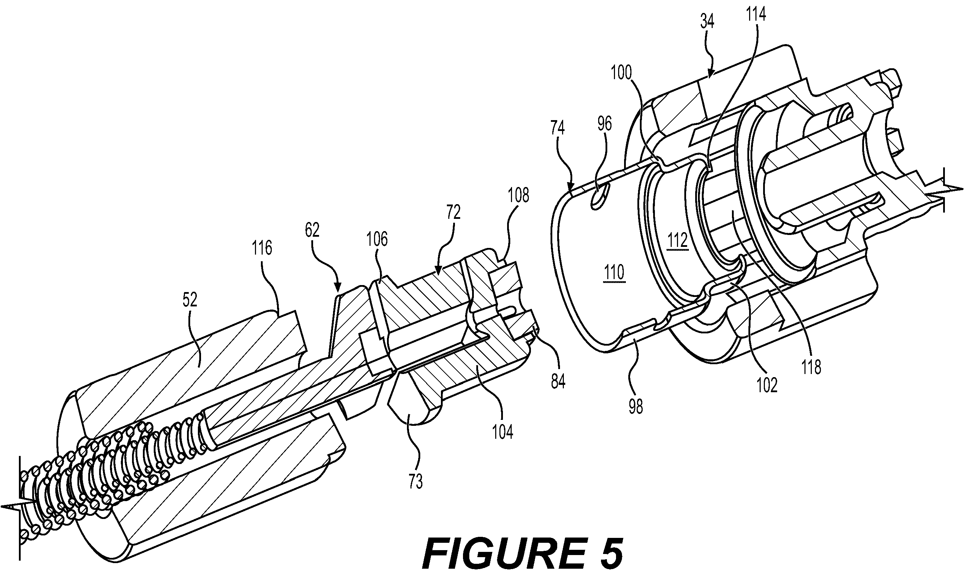

Fig. 5 is a disassembled view of the armature assembly 32. The seat sleeve 74 includes at least one sleeve aperture 96 for permitting fluid flow therethrough. The at least one sleeve aperture 96 may be located in circumferential alignment with one more of the fin channels 78. The seat sleeve 74 further includes a first sleeve wall 98 and a step 100 that extends radially inwardly into a second sleeve wall 102. The plunger seat 72 includes a body portion 104 extending between a flanged portion 106 and a seal-retaining portion 108. The flanged portion 106 is adjacent to the front face 73 and extends radially outwardly from the body portion 104 and the seal-retaining portion 108 is located adjacent to the seat seal 84 and extends radially inwardly from the body portion 104.

When assembled, the first sleeve wall 98 may define a first opening 110 sized for accommodating and guiding the fins 76 and the flanged portion 106. In some embodiments, the first opening 110 is cylindrically shaped and the first sleeve wall 98 slidably interfaces with radially outermost portions 107 of the fins 76 and the flanged portion 106. The second sleeve wall 102 may define a second opening 112 sized for accommodating the body portion 104. In some embodiments, the body portion 104 slidably interfaces with the second sleeve wall 102. A sleeve flange 114 may extend radially inwardly from the second sleeve wall 102 opposite the step 100 for accommodating the seal-retaining portion 108. In some embodiments, the seal-retaining portion 108 slidably interfaces with the sleeve flange 114. In some embodiments, the central body 52 may include a stepped portion 116 that extends radially inwardly towards the seat sleeve 74 such that the stepped portion 116 can be located within the first opening 110 and the non-stepped portion of the central body 52 can abut the first sleeve wall 98.

With reference to Fig. 3 and Fig. 5, the valve body 36 includes a series of valve body channels 118 in fluid communication with at least one of the outer apertures 33 and at least one of the sleeve apertures 96 for permitting fluid transfer in the first-stage open position and the second-stage open position. The valve cup 72 may further include an interior cup wall 120 that defines, in sequence, a first cup portion 122, a second cup portion 124, a third cup portion 126, and a fourth cup portion 128 that terminates around a base 130 for abutment with the second end 28 of the outer sleeve 24. Each of the cup portions 122, 124, 126, and 128 may be spaced by a cup step 132 that may be conically shaped. As such, the first cup portion 122 may extend to one of the cup steps 132 that extends radially inwardly to the second cup portion 124, the second cup portion 124 may extend to another of the cup steps 132 that extends radially inwardly to the third cup portion 126, and the third cup portion 126 may extend to another of the cup steps 132 that extends radially inwardly to the fourth cup portion 128. As best illustrated in Fig. 3, the outer sleeve 24, near the second end 28, may taper between a series of outer steps 134 to match the profile of the sequence of cup portions 122, 124, 126, and 128 and the cup steps 132.

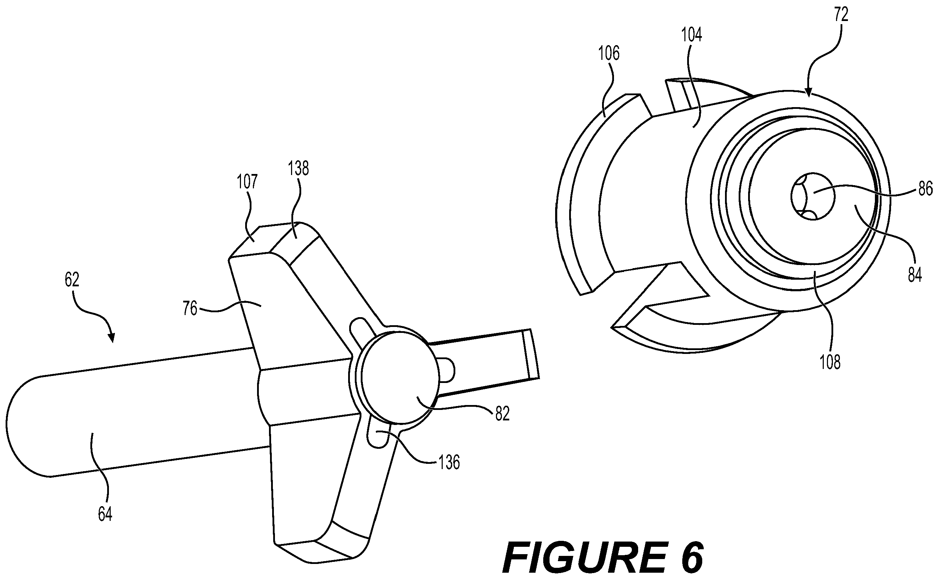

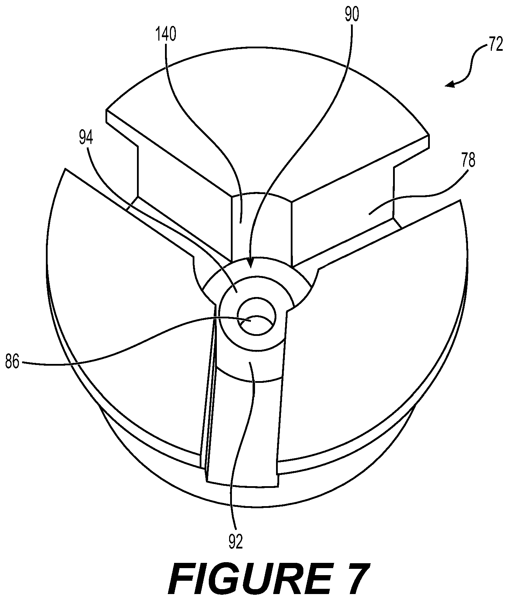

Fig. 6 is a disassembled view of the armature assembly 32 illustrating a side of the plunger seat 72 oriented towards the second end 28. In some embodiments, the poppet seal 82 includes tab portions 136 molded into the fins 76. Each of the fins 76 may include a rounded outer edge 138 to ease assembly and sliding movement. Fig. 7 is a perspective view of the plunger seat 72 oriented towards the first end 26. The central opening 80 may include a rounded surface 140 between fin channels 78 for facilitating slidable movement and contact of the poppet body 67.

The two-stage valve assembly 20 may be integrated in a variety of vehicular systems. In some embodiments, the two-stage valve assembly 20 may be integrated into a vehicular lift system, such as an air lift system. As such, two-stage valve assembly 20 may selectively permit fluid transfer between two or more chambers. For example, in one of the open positions, a fluid may flow from a first chamber through the valve opening 40 whereafter the fluid may be transferred through the valve body channels 118, the outer apertures 33, and the sleeve apertures 96 to a second chamber. In operation, the two-stage valve assembly 20 may typically operate in the closed position. A magnetic force generated from the stator 30 attracts the armature assembly 32 to overcome forces (e.g., pneumatic pressure) and spring 68, 70 preload. Because increases in flow requirements have traditionally required larger valve openings and increased pressure, the present invention provides the first-stage open position to provide an initial pressure reduction. In the first-stage open position, the poppet seal 82 is spaced from the seat channel 86. Once the pressure reduction is achieved, the stator 30 can move the seat seal 84 and the two-stage valve assembly 20 is moved to the second-stage open position permitting a greater fluid flow. In some embodiments, the poppet seal 82 may be spaced from the seat channel 86, in sealing engagement with the seat channel 86, or move between a spaced and sealing engagement during the second-stage open position.

It should be appreciated that the foregoing description of the embodiments has been provided for purposes of illustration. In other words, the subject disclosure it is not intended to be exhaustive or to limit the disclosure.

## Claims

1. A two-stage valve assembly comprising:
an outer sleeve (24) extending along an axis (A) between a first end (26) and a second end (28);
a stator (30) located in the first end (26) and a valve opening (40) located in the second end (28); and
an armature assembly (32) for selectively closing the valve opening (40) and opening the valve opening (40) in a first-stage open position and a second-stage open position, the armature assembly (32) comprising:
a plunger (62) moveable along the axis (A) and including a poppet portion (66) having a poppet seal (82) oriented towards the second end (28);
a plunger seat (72) moveable along the axis (A) and located between the poppet portion (66) and the valve opening (40), the plunger seat (72) including a seat seal (84) for sealing against the valve opening (40), a seat channel (86) extending through the seat seal (84) and the plunger seat (72) that is in fluid communication with the valve opening (40); and
wherein the poppet seal (82) closes the seat channel (86) and the seat seal (84) closes the valve opening (40) in the closed position, the poppet seal (82) is spaced from the seat channel (86) in the first-stage open position, and the seat seal (84) is spaced from the valve opening (40) in the second-stage-open position,
wherein a first-stage preload spring (68) extends from the stator (30) to the plunger (62) and biases the plunger (62) towards the seat channel (86),
**characterized in that** a second-stage preload spring (70) extends from the stator (30) to the plunger seat (72) and biases the plunger seat (72) towards the valve opening (40),
wherein the first-stage preload spring (68) defines a smaller preload than the second-stage preload spring (70).

2. The two-stage valve assembly as set forth in claim 1, wherein the poppet portion (66) defines a plurality of fins (76) extending radially outwardly and the plunger seat (72) defines a plurality of fin channels (78) for accommodating the fins (76) and guiding the poppet portion (66) along the axis.

3. The two-stage valve assembly as set forth in claim 2, wherein the plunger seat (72) includes a surface (90) facing the poppet seal (82) and encircling the seat channel (86) that is non-flat.

4. The two-stage valve assembly as set forth in claim 3, wherein the surface (90) includes a wall (92) having a conical shape narrowing towards the poppet seal (82).

5. The two-stage valve assembly as set forth in any one of claims 2 to 4, wherein the plunger seat (72) is located in a seat sleeve (74) and wherein the plunger seat (72) includes a body portion (104) and a flanged portion (106) extending radially outwardly from the body portion (104).

6. The two-stage valve assembly as set forth in claim 5, wherein the seat sleeve (74) includes a first sleeve wall (98) sized to make slidable contact with the flanged portion (106).

7. The two-stage valve assembly as set forth in claim 6, wherein the seat sleeve (74) includes a second sleeve wall (102) sized to make slidable contact with the body portion (104).

8. The two-stage valve assembly as set forth in claim 7, wherein the fins (76) each include a radially outermost portion (107) that is sized to make slidable contact with the first sleeve wall (98).

9. The two-stage valve assembly as set forth in claim 1, further comprising:
a central body (52) located in the outer sleeve (24) and extending between the stator (30) and the valve opening (40), the central body (52) defining a channel (54) extending along the axis,
wherein the poppet seal (82) is located between the central body (52) and the valve opening (40) and moveable along the axis.

10. The two-stage valve assembly as set forth in claim 9, wherein the first-stage preload spring (68) extends from the stator (30) through the channel (54) in the central body (52) to the plunger (62), particularly wherein the second-stage preload spring (70) extends from the stator (30) around the first-stage preload spring (68) and through the channel (54) in the central body (52) to the plunger seat (72),
particularly wherein the plunger (62) includes a rod body (64) and the first-stage preload spring (68) abuts a face end of the rod body (64) and the second-stage preload spring (70) extends around the rod body (64) to the plunger seat (72).

11. The two-stage valve assembly as set forth claim 10, wherein a valve cup (34) is sealed to the second end of the outer sleeve (24), the valve cup (34) including a valve structure (38) that is tubular-shaped and extends from the second end (28) towards the first end (26) of the outer sleeve (24), the valve opening (40) defined by the valve structure (38), particularly wherein the outer sleeve (24) defines at least one outer aperture (33) and the valve cup (34) defines at least one valve body channel (118) in fluid communication with the at least one outer aperture (33), particularly wherein the plunger seat (72) is located in a seat sleeve (74) and wherein the seat sleeve (74) defines at least one sleeve aperture (96) in communication with the outer aperture (33) and the valve body channel (118).

12. The two-stage valve assembly as set forth in any one of claims 1 to 11, wherein the first-stage open position includes a first flow rate and the second-stage open position includes a second flow rate greater than the first flow rate.

## Patentansprüche

1. Eine zweistufige Ventilbaugruppe, die aus Folgendem besteht:
einer äußeren Hülse (24), die sich entlang einer Achse (A) zwischen einem ersten Ende (26) und einem zweiten Ende (28) erstreckt;
einem im ersten Ende (26) angeordneten Stator (30) und einer im zweiten Ende (28) angeordnete Ventilöffnung (40); und
einer Ankerbaugruppe (32) zum selektiven Schließen der Ventilöffnung (40) und zum Öffnen der Ventilöffnung (40) in einer Öffnungsposition der ersten Stufe und einer Öffnungsposition der zweiten Stufe, wobei die Ankerbaugruppe (32) umfasst:
einen Kolben (62), der entlang der Achse (A) beweglich ist und einen Tellerventilteil (66) mit einer Tellerventildichtung (82) aufweist, die zum zweiten Ende (28) hin ausgerichtet ist;
einen Kolbensitz (72), der entlang der Achse (A) beweglich ist und zwischen dem Tellerventilteil (66) und der Ventilöffnung (40) angeordnet ist, wobei der Kolbensitz (72) eine Sitzdichtung (84) zum Abdichten gegen die Ventilöffnung (40), einen Sitzkanal (86), der sich durch die Sitzdichtung (84) und den Kolbensitz (72) erstreckt und in Flüssigkeitsverbindung mit der Ventilöffnung (40) steht, aufweist; und
wobei die Tellerventildichtung (82) den Sitzkanal (86) und die Sitzdichtung (84) die Ventilöffnung (40) in der geschlossenen Position verschließt, die Tellerventildichtung (82) in der offenen Position der ersten Stufe von dem Sitzkanal (86) beabstandet ist und die Sitzdichtung (84) in der offenen Position der zweiten Stufe von der Ventilöffnung (40) beabstandet ist,
wobei sich eine Vorspannfeder der ersten Stufe (68) vom Stator (30) zum Kolben (62) erstreckt und den Kolben (62) in Richtung des Sitzkanals (86) vorspannt,
**dadurch gekennzeichnet, dass** sich eine Vorspannfeder der zweiten Stufe (70) vom Stator (30) zum Kolbensitz (72) erstreckt und den Kolbensitz (72) zur Ventilöffnung (40) hin vorspannt,
wobei die Vorspannfeder der ersten Stufe (68) eine geringere Vorspannung definiert als die Vorspannfeder der zweiten Stufe (70).

2. Die zweistufige Ventilbaugruppe nach Anspruch 1, wobei der Tellerventilteil (66) eine Vielzahl von Rippen (76) definiert, die sich radial nach außen erstrecken, und der Kolbensitz (72) eine Vielzahl von Rippenkanälen (78) definiert, um die Rippen (76) aufzunehmen und den Tellerventilteil (66) entlang der Achse zu führen.

3. Die zweistufige Ventilbaugruppe nach Anspruch 2, wobei der Kolbensitz (72) eine Oberfläche (90) aufweist, die der Tellerventildichtung (82) zugewandt ist und den Sitzkanal (86) umgibt und nicht eben ist.

4. Die zweistufige Ventilbaugruppe nach Anspruch 3, wobei die Oberfläche (90) eine Wand (92) mit einer konischen Form aufweist, die sich zur Tellerventildichtung (82) hin verengt.

5. Die zweistufige Ventilbaugruppe nach einem der Ansprüche 2 bis 4, wobei der Kolbensitz (72) in einer Sitzhülse (74) angeordnet ist und wobei der Kolbensitz (72) einen Körperabschnitt (104) und einen Flanschabschnitt (106) aufweist, der sich von dem Körperabschnitt (104) radial nach außen erstreckt.

6. Die zweistufige Ventilbaugruppe nach Anspruch 5, wobei die Sitzhülse (74) eine erste Hülsenwand (98) aufweist, die so bemessen ist, dass sie in gleitendem Kontakt mit dem Flanschabschnitt (106) steht.

7. Die zweistufige Ventilbaugruppe nach Anspruch 6, wobei die Sitzhülse (74) eine zweite Hülsenwand (102) aufweist, die so bemessen ist, dass sie in gleitendem Kontakt mit dem Körperabschnitt (104) steht.

8. Die zweistufige Ventilbaugruppe nach Anspruch 7, wobei die Rippen (76) jeweils einen radial äußersten Abschnitt (107) aufweisen, der so bemessen ist, dass er in gleitendem Kontakt mit der ersten Hülsenwand (98) steht.

9. Die zweistufige Ventilbaugruppe nach Anspruch 1, die ferner Folgendes umfasst: einen Zentralkörper (52), der in der äußeren Hülse (24) angeordnet ist und sich zwischen dem Stator (30) und der Ventilöffnung (40) erstreckt, wobei der Zentralkörper (52) einen Kanal (54) definiert, der sich entlang der Achse erstreckt, wobei die Tellerventildichtung (82) zwischen dem Zentralkörper (52) und der Ventilöffnung (40) angeordnet und entlang der Achse beweglich ist.

10. Die zweistufige Ventilbaugruppe nach Anspruch 9, wobei sich die Vorspannfeder der ersten Stufe (68) vom Stator (30) durch den Kanal (54) im Zentralkörper (52) zum Kolben (62) erstreckt, insbesondere wobei sich die Vorspannfeder der zweiten Stufe (70) vom Stator (30) um die Vorspannfeder der ersten Stufe (68) und durch den Kanal (54) im Zentralkörper (52) zum Kolbensitz (72) erstreckt,
insbesondere wobei der Kolben (62) einen Stangenkörper (64) aufweist und die Vorspannfeder der ersten Stufe (68) an einem Stirnende des Stangenkörpers (64) anliegt und die Vorspannfeder der zweiten Stufe (70) sich um den Stangenkörper (64) herum zum Kolbensitz (72) erstreckt.

11. Die zweistufige Ventilbaugruppe nach Anspruch 10, bei der ein Ventilteller (34) mit dem zweiten Ende der äußeren Hülse (24) abgedichtet ist, wobei der Ventilteller (34) eine Ventilstruktur (38) aufweist, die rohrförmig ist und sich vom zweiten Ende (28) zum ersten Ende (26) der äußeren Hülse (24) erstreckt, wobei die Ventilöffnung (40) durch die Ventilstruktur (38) definiert ist, insbesondere wobei die äußere Hülse (24) mindestens eine äußere Öffnung (33) definiert und der Ventilteller (34) mindestens einen Ventilkörperkanal (118) in Flüssigkeitsverbindung mit der mindestens einen äußeren Öffnung (33) definiert, insbesondere wobei der Kolbensitz (72) in einer Sitzhülse (74) angeordnet ist und wobei die Sitzhülse (74) mindestens eine Hülsenöffnung (96) in Verbindung mit der äußeren Öffnung (33) und dem Ventilkörperkanal (118) definiert.

12. Die zweistufige Ventilbaugruppe nach einem der Ansprüche 1 bis 11, wobei die offene Stellung der ersten Stufe eine erste Durchflussmenge und die offene Stellung der zweiten Stufe eine zweite Durchflussmenge, die größer als die erste Durchflussmenge ist, aufweist.

## Revendications

1. Un ensemble soupape à deux étages comprenant:
un manchon extérieur (24) s'étendant le long d'un axe (A) entre une première extrémité (26) et une seconde extrémité (28);
un stator (30) situé à la première extrémité (26) et une ouverture de soupape (40) située à la seconde extrémité (28); et
un ensemble induit (32) conçu pour fermer sélectivement l'ouverture de soupape (40) et ouvrir l'ouverture de soupape (40) dans une position d'ouverture de premier étage et dans une position d'ouverture de second étage, l'ensemble induit (32) comprenant:
un plongeur (62) mobile le long de l'axe (A) et y compris une partie clapet (66) munie d'un joint de clapet (82) orienté vers la seconde extrémité (28);
un siège du plongeur (72) mobile le long de l'axe (A) et situé entre la partie clapet (66) et l'ouverture de soupape (40), le siège du plongeur (72) incluant un joint de siège (84) destiné à assurer l'étanchéité avec l'ouverture de soupape (40), un canal de siège (86) traversant le joint de siège (84) et le siège du plongeur (72), en communication fluide avec l'ouverture de soupape (40); et
dans lequel le joint de clapet (82) ferme le canal de siège (86) et le joint de siège (84) ferme l'ouverture de soupape (40) en position fermée, le joint de clapet (82) étant espacé du canal de siège (86) en position d'ouverture de premier étage, et le joint de siège (84) étant espacé de l'ouverture de soupape (40) en position d'ouverture de second étage,
dans lequel un ressort de précharge de premier étage (68) s'étend du stator (30) au plongeur (62) et pousse le plongeur (62) vers le canal de siège (86),
**caractérisé en ce qu'**un ressort de précharge de second étage (70) s'étend du stator (30) au siège du plongeur (72) et pousse le siège du plongeur (72) vers l'ouverture de soupape (40),
dans lequel le ressort de précharge de premier étage (68) présente une précharge inférieure à celle du ressort de précharge de second étage (70).

2. L'ensemble soupape à deux étages selon la revendication 1, dans lequel la partie clapet (66) comporte une pluralité d'ailettes (76) s'étendant radialement vers l'extérieur, et le siège du plongeur (72) comprend une pluralité de canaux d'ailettes (78) destinés à loger les ailettes (76) et à guider la partie clapet (66) le long de l'axe.

3. L'ensemble soupape à deux étages selon la revendication 2, dans lequel le siège du plongeur (72) inclut une surface (90) faisant face au joint de clapet (82) et entourant le canal du siège (86) qui est non plan.

4. L'ensemble soupape à deux étages selon la revendication 3, dans lequel la surface (90) inclut une paroi (92) ayant une forme conique se rétrécissant vers le joint de clapet (82).

5. L'ensemble soupape à deux étages selon l'une quelconque des revendications 2 à 4, dans lequel le siège du plongeur (72) est situé dans un manchon de siège (74), et dans lequel le siège du plongeur (72) inclut une partie corps (104) et une partie à collerette (106) s'étendant radialement vers l'extérieur à partir de la partie corps (104).

6. L'ensemble soupape à deux étages selon la revendication 5, dans lequel le manchon de siège (74) inclut une première paroi de manchon (98) dimensionnée de manière à établir un contact coulissant avec la partie à collerette (106).

7. L'ensemble soupape à deux étages selon la revendication 6, dans lequel le manchon de siège (74) inclut une seconde paroi de manchon (102) dimensionnée de manière à établir un contact coulissant avec la partie corps (104).

8. L'ensemble soupape à deux étages selon la revendication 7, dans lequel chacune des ailettes (76) inclut une partie la plus extérieure radialement (107) dimensionnée de manière à établir un contact coulissant avec la première paroi de manchon (98).

9. L'ensemble soupape à deux étages selon la revendication 1, comprenant en outre:
un corps central (52) situé dans le manchon extérieur (24) et s'étendant entre le stator (30) et l'ouverture de soupape (40), le corps central (52) définissant un canal (54) s'étendant le long de l'axe,
dans lequel le joint de clapet (82) est situé entre le corps central (52) et l'ouverture de soupape (40) et est mobile le long de l'axe.

10. L'ensemble soupape à deux étages selon la revendication 9, dans lequel le ressort de précharge du premier étage (68) s'étend du stator (30) à travers le canal (54) situé dans le corps central (52) jusqu'au plongeur (62), en particulier dans le cas où le ressort de précharge du second étage (70) s'étend du stator (30) autour du ressort de précharge du premier étage (68) et à travers le canal (54) dans le corps central (52) jusqu'au siège du plongeur (72),
en particulier dans le cas où le plongeur (62) inclut un corps de tige (64), le ressort de précharge du premier étage (68) venant en butée contre une extrémité frontale du corps de tige (64), et le ressort de précharge du second étage (70) s'étendant autour du corps de tige (64) jusqu'au siège du plongeur (72).

11. L'ensemble soupape à deux étages selon la revendication 10, dans lequel une coupelle de soupape (34) est étanchéifiée à la seconde extrémité du manchon extérieur (24), ladite coupelle de soupape (34) incluant une structure de soupape (38) qui est de forme tubulaire et s'étend depuis la seconde extrémité (28) vers la première extrémité (26) du manchon extérieur (24), l'ouverture de soupape (40) étant définie par ladite structure de soupape (38), en particulier dans le cas où le manchon extérieur (24) définit au moins une ouverture extérieure (33) et la coupelle de soupape (34) définit au moins un canal de corps de soupape (118) en communication fluidique avec au moins une ouverture extérieure (33), en particulier lorsque le siège du plongeur (72) est situé dans un manchon de siège (74), ledit manchon de siège (74) définissant au moins une ouverture de manchon (96) en communication avec l'ouverture extérieure (33) et le canal de corps de soupape (118).

12. L'ensemble soupape à deux étages selon l'une quelconque des revendications 1 à 11, dans lequel la position ouverte du premier étage inclut un premier débit, et la position ouverte du second étage comprend un second débit supérieur au premier débit.
